# EUROPÄISCHE PATENTSCHRIFT

(11) **EP 1 775 658 B1**
(45) Veröffentlichungstag und Bekanntmachung des Hinweises auf die Patenterteilung: **14.01.2009**
(21) Anmeldenummer: 06020951.7
(22) Anmeldetag: 05.10.2006
(51) Int. Cl.: G06F 11/14, G06F 1/18

(54) **Vorrichtung zur Datensicherung**
Data backup apparatus
Dispositif de sauvegarde de données

(30) Priorität: 06.10.2005 DE 202005015706 U
(43) Veröffentlichungstag der Anmeldung: 18.04.2007
(73) Patentinhaber: Saynet Solutions GmbH, 85221 Dachau (DE)
(72) Erfinder: Saygin, Yakup, 85221 Dachau (DE)
(74) Vertreter: Grünecker, Kinkeldey, Stockmair & Schwanhäusser Anwaltssozietät

(56) Entgegenhaltungen:
- EP-A2- 0 242 970
- US-A- 5 822 184
- US-A1- 2002 007 447
- US-A1- 2003 193 775
- US-B1- 6 188 571

## Beschreibung

Die vorliegende Erfindung bezieht sich auf ein System zur Datensicherung.

Für Unternehmen, Forschungseinrichtungen und auch Privatpersonen ist die Sicherung von elektronischen Datenbeständen von großer Bedeutung. Die Datensicherung dient dem Schutz vor Datenverlust durch Diebstahl, Feuer, Hochwasser, Hardwareschäden und versehentlichem oder absichtlichem Löschen oder Überschreiben der Daten. Beträgt das zu sichernde Datenvolumen mehr als einige 100 GB, stößt man mit der manuellen Ausführung der Datensicherung mittels eines Bandlaufwerkes schnell an praktikable Grenzen.

Unter einer Datensicherung oder Backup versteht man den Vorgang des Kopierens der in einem Computersystem vorhandenen Daten auf ein zusätzliches Speichermedium. Dieses Speichermedium ist im Allgemeinen transportabel, um dadurch im Anschluss an das Kopieren an einen Verwahrungsort gebracht werden zu können. Das Kopieren der Daten dient dem Erzeugen einer zusätzlichen Kopie eines ursprünglichen Datenbestandes. Wird der ursprüngliche Datenbestand beschädigt oder geht dieser verloren, können diese Daten zurückkopiert werden. Der Vorgang des Zurückkopierens wird auch als Restore bezeichnet. Der Datenbestand kann neben Daten auch gespeicherten Programmcode beinhalten. Der Unterschied zwischen einem Backup und einer Archivierung liegt darin, dass die Daten dupliziert werden, und nicht lediglich verschoben werden. Die Aufbewahrung gesicherter Daten sollte, wie bereits angesprochen, örtlich entfernt von der erzeugenden EDV-Anlage erfolgen.

Für die Datensicherung großer Datenmengen, kommen in der Regel sog. Kassettenarchivsysteme (Tape Roboter) zum Einsatz. Hier wird der Wechsel eines Datensicherungsbandes, der nach dem Erreichen des Bandendes ansteht, durch einen dafür vorgesehenen Roboter erledigt. Ein solches automatisiertes Archivierungssystem ist sehr teuer, und die Verwendung von Magnetbändern zur Datensicherung hat einige Nachteile. Zu den Nachteilen gehören die Empfindlichkeit gegen Staub, Feuchtigkeit und magnetische Einflüsse sowie die üblicherweise lange Zugriffszeit auf die gewünschten Daten. Da es bei einem Bandlaufwerk keinen Direktzugriff auf die gewünschte Datei gibt, sind Zugriffszeiten im Minutenbereich keine Seltenheit. Auch ist die derzeit mögliche Speicherkapazität von Magnetbändern stark begrenzt, so dass üblicherweise eine signifikante Anzahl von Bändern für eine Sicherung notwendig ist.

Die derzeit bekannten und erhältlichen Ausführungsformen solcher Datensicherungssysteme weisen jedoch neben den bereits erwähnten Nachteilen der Anfälligkeit gegenüber Staub- und Magnetfeldern vor allem den Nachteil auf, dass die Anschaffungs- und Unterhaltungskosten sehr hoch sind. Die hohen Anschaffungskosten sind dadurch bedingt, dass das gesamte System neben dem erforderlichen Bandlaufwerk noch den Bandwechselroboter beinhaltet. Darüber hinaus fallen noch die Kosten für die Datensicherungsbänder an, die schon nach wenigen Wiederbeschreibungsvorgängen gegen neue Bänder ersetzt werden müssen. Die somit einhergehenden hohen Anschaffungs- und Unterhaltungskosten werden in der Praxis als außerordentlich nachteilig empfunden.

US 20021007447 A1 bezieht sich auf eine Backup-Vorrichtung, welche Festplatten benutzt. Die Backup-Vorrichtung benutzt Festplatten und wählt eine bestimmte Festplatte zur Zeit des Gerätezugriffs aus. Die Vorrichtung umfasst eine Festplattenauswahleinrichtung, welche nur eine bestimmte Festplatte der Vielzahl von Festplatten aktiviert. Die Vorrichtung umfasst eine Vielzahl von Festplatten und eine Festplattenauswahleinrichtung für das Auswählen einer bestimmten Festplatte, wobei die Festplattenauswahlvorrichtung die Spannungsversorgung und einen Datenbus derart steuert, dass die ausgewählte Festplatte aktiviert wird. Die Daten-Backup-Vorrichtung umfasst eine Vielzahl von Festplatten sowie ein Switchboard, welche die Festplattenauswahleinrichtung umfasst für das Auswählen und Aktivieren einer speziellen Festplatte. Des Weiteren gibt es eine Spannungsversorgung 4, eine Indikatorsektion 5, um den Zustand der Festplatten anzuzeigen und einen Verbinder 7, welcher Steuersignale von einer übergeordneten Vorrichtung (high-order apparatus) weiterleitet. Das Switchboard wählt eine Festplatte aus und führt eine Verbindungsumschaltung des Datenbusses unter Spannungsversorgung durch. Gemäß dem Steuersignal von dem High-order Apparatus. Das Switchboard hat die folgenden Funktionen: a) Umschaltfunktion, b) SCSIzu-ATA-Umwandlung, c) Überwachungsfunktion für die Festplatten und d) Festplattenaus-wahlfunktion. Die Festplatten sind in Verwahrungsfächem installiert. Die Verwahrungsfächer erleichtern die Wartung und den Austausch der Festplatten. Es kann nur eine Festplatte ausgewählt sein, auch können zwei oder mehrere Festplatten aktiviert sein.

US 6 188 571 B1 bezieht sich auf ein RAID-System mit einem hochintegrierten Controller. Die beschriebene Vorrichtung besitzt einen Controller und eine Vielzahl von IDE-Laufwerken. Die beschriebene Vorrichtung ermöglicht eine bequeme Wartung durch den Benutzer, hierfür kann die Frontblende abgenommen werden, um eine oder mehrere Laufwerke zu ersetzen. Die Laufwerke sind in dem Gehäuse mittels einer Verriegelungsvorrichtung angebracht. Für jedes Laufwerk gibt es ein Paar von Leuchtdioden und eine Taste. Die Taste wird benutzt, um dem RAID-Controller zu signalisieren, dass das entsprechende Laufwerk entfernt werden soll. Nachdem das Laufwerk elektrisch abgekoppelt ist, kann dieses physikalisch entfernt werden mittels des Verriegelungsmechanismus. Die Laufwerkshalterung ist mit einem Paar Schienen ausgestattet. Der RAID-Controller umfasst einen RAID-Engine, um notwendige Queueing- und DMA-Funktionen durchzuführen.

US 5 822 184 bezieht sich auf eine mobile Datenvorrichtung, welche in einen herkömmlichen Erweiterungsschacht passt. Einzelne "Plug-in"-Speicherlaufwerke, wie beispielsweise Festplatten oder CD-ROM-Laufwerke, befinden sich vertikal angeordnet in dem Gehäuse. Eine Hauptplatine mit Plug-in-Verbindung ermöglicht ein einfaches Austauschen von defekten Laufwerken. Ein Datenbus verbindet die einzelne Laufwerke. Ein Controller ermittelt automatisch die Anzahl von Laufwerken und das Protokoll, welches benötigt wird, um auf jedes Laufwerk zuzugreifen. Ein RAID-Controller steuert eine Anordnung von Laufwerken, welche seriell oder parallel verbunden sind. Diese Anordnung stellt eine Stufe eines redundanten Speichers dar.

EP 0 242 970 A2 beschreibt ein fehlertolerantes modulares System für einen Computer. Das System umfasst ein Gehäuse, eine erste Spannungsversorgung und eine zweite Backup-Spannungsversorgung, wobei die erste Spannungsversorgung Hardwarebauteile, wie beispielsweise Laufwerke, versorgt. Eine Steuervorrichtung konfiguriert jedes Modul und zeigt den Zustand der Hardwaremodule und der Leistungsversorgungsmodule an. Die Steuereinrichtung ermöglicht den Zugriff auf Konfigurationssteuerung und ermöglicht das Anzeigen des Zustands der Laufwerke. Neben magnetischen Speichermedien können auch andere Hardwareelemente eingebaut sein.

US 20031193775 A1 beschreibt, dass für Datensicherung und Backup sogenannte Wechselrahmen entwickelt wurden. Die Speichereinrichtung in dem inneren Rahmen kann ein ZIP-Laufwerk, ein MO-Laufwerk, ein Bandlaufwerk, ein Flash-Speicher-Laufwerk oder eine Festplatte sein. Um Funktionen wie Hot-Swap oder Plug-and-Play auszuführen, muss der Computer heruntergefahren werden, bevor eine DIE-Speichervorrichtung ersetzt werden kann. Die USB-Schnittstelle ist solchen Beschränkungen nicht unterworfen und man benötigt lediglich eine USB-Schnittstellenpheripherie, um festzustellen, ob die Speichereinrichtung Hot-Swap-fähig oder Plug-and-Play-fähig ist. Die beschriebene Technik unterscheidet sich vom Stand der Technik darin, dass der äußere Wechselrahmen sich mit dem inneren Laufwerkseinschub mittels USB verbindet. Im Inneren Einschub können IDE-Geräte, wie beispielsweise Festplatten, ZIP-Laufwerk, MO-Laufwerk, Bandlaufwerk oder ein Flash-Speicher-Kartenleser, eingebaut sein. Ein integrierter Steuerungsschaltkreis nimmt die Umsetzung von IDE-Signalen zu USB-Signalen vor.

Es ist daher die Aufgabe der vorliegenden Erfindung, eine Datensicherungsvorrichtung zur Verfügung zu stellen, die im Hinblick auf die Anschaffungs- und Unterhaltungskosten bei gleichzeitiger Beibehaltung oder Steigerung des Bedienungskomforts und der Datensicherheit optimiert ist.

Diese Aufgabe wird durch eine Daten-Backup-Speichervorrtchtung zur Sicherung von Daten von mindestens einem Datenspeicher mit einem Gehäuse, das eine Steuereinheit und N Backup-Speichereinheiten aufweist wie in Anspruch 1 definiert wird, gelöst.

Dieses hat den Vorteil, dass Anzahl der benötigten Auswechselungen der Speichermedien minimiert wird und somit der Aufwand zum Betrieb der Datenspeichervorrichtung gering ist

Eine weitere bevorzugte Ausführungsform ist dadurch gekennzeichnet, dass jede Backup-Speichereinheit ein Gehäuse aufweiset, das so ausgeführt ist, dass die Backup-Speichereinheiten entsprechende Einschubeinrichtungen des Gehäuses eingeschoben und von diesen entnommen werden kann. Dies hat den Vorteil, dass dem Benutzer der Daten-Backup-Speichervorrichtung die Entnahme der einzelnen Backup-Speichereinheiten wesentlich erleichtert wird.

Eine weitere bevorzugte Ausführungsform ist dadurch gekennzeichnet, dass das Speichermedium und die zugeordnete Lese-/Schreibeinheit mindestens eine Backup-Speichereinheit als eine Festplatte ausgeführt ist. Dies hat den Vorteil, dass die Wahl einer Festplatte als Massenspeicher sehr kurze Zugriffszeiten auf die gewünschten Daten ermöglicht. Die bei Bandlaufwerken sonst übliche Wartezeit wird reduziert.

Eine weitere bevorzugte Ausführungsform der erfindungsgemäßen Vorrichtung wird im unabhängigen Anspruch 9 definiert.

Die vorliegende Erfindung baut auf der Erkenntnis auf, dass die herkömmliche Datensicherung mit mehreren Bandlaufwerken und Robotern und anschließender Aufbewahrung der Bänder an einem sicheren Ort aus Sicherheitsaspekten nach wie vor das Nonplusultra darstellt. Die Erfindung baut weiterhin auf der Erkenntnis auf, dass Massenspeicher, bei denen der Datenbestand über mehrere Festplatten gespeichert wird, um somit bei Ausfall einer der Festplatten die verlorenen Daten über den Inhalt der nicht verlorenen Festplatten wiederherstellen zu können, keine ausreichende Sicherheit für Katastrophensituationen bieten. Ausgehend von diesen Erkenntnissen vereint die vorliegende Erfindung die Vorteile unterschiedlicher Speichersysteme, indem die Bänder eines Bandlaufsicherungssystems durch Festplatten ersetzt werden und ein Wechseln der Festplatten mittels eines Roboters dadurch vermieden wird, indem die Festplatten jeweils über eine eigene Lese-/Schreibeinrichtung verfügen und sämtlich elektronisch ansteuerbar sind, so dass statt eines ständigen Wechsels von Bändern im Bedarfsfall einfach elektronisch die nächste zu verwendende Festplatte angesteuert wird. Auf diese Weise kann die Frequenz, mit der die Speichermedien zu wechseln sind, stark reduziert werden und somit kann auf einen Roboter gänzlich verzichtet werden. Zwar ist auch bei dem erfindungsgemäßen System letztendlich eine Entnahme eines Speichermediums und eine Verbringung dieses an einen sicheren Ort erforderlich, jedoch ist im Vorfeld kein mehrfacher Bandwechsel erforderlich. Beispielsweise können so viele Festplatten wie Werktage vorhanden sein, plus eine Festplatte für die Wochensicherung. In diesem sehr einfachen Fall, müsste dann einmal pro Woche eine Festplatte entnommen werden und an einen sicheren Ort geschafft werden. Bis zu diesem Zeitpunkt werden Daten täglich auf einer anderen und jeweils elektronisch angesteuerten Festplatte gespeichert, ohne dass die Festplatten für die vorausgegangenen Tage entnommen werden müssten. Selbstverständlich kann die Vorrichtung auch eine wesentlich größere Anzahl von Festplatten aufweisen, wodurch dann auch Wochen- oder Monatskopien im Gehäuse verbleiben und unter Umständen nur einmal jährlich eine Sicherungskopie an einen sicheren Ort geschafft werden muss. Bevorzugterweise erfolgt jedoch eine Entnahme monatsweise, da sich dies als vernünftiger Kompromiss zwischen Aufwand für den Transport des Speichermediums an einen sicheren Ort und Datensicherheit bzw. Datenwiederherstellung, erwiesen hat.

Bevorzugte Ausgestaltungen der vorliegenden Erfindung werden im Weiteren mit Bezug auf folgende Zeichnungsfiguren im Detail beschrieben. Hierbei zeigen die Zeichnungen im Einzelnen:
Fig. 1 eine schematische Darstellung einer bevorzugten Ausführungsform der erfindungsgemäßen Vorrichtung zur Datenspeicherung,
Fig. 2 eine bevorzugte Ausführungsform der Daten-Backup-Speichervorrichtung,
Fig. 3 eine weitere bevorzugte Ausführungsform der Daten-Backup-Speichervorrichtung,
Fig. 4 ein entnehmbares Gehäuse eines Datenspeichers zusammen mit einer bevorzugten Ausführungsform der Daten-Backup-Speichervorrichtung, und
Fig. 5 eine bevorzugte Ausführungsform des entnehmbaren Gehäuses.

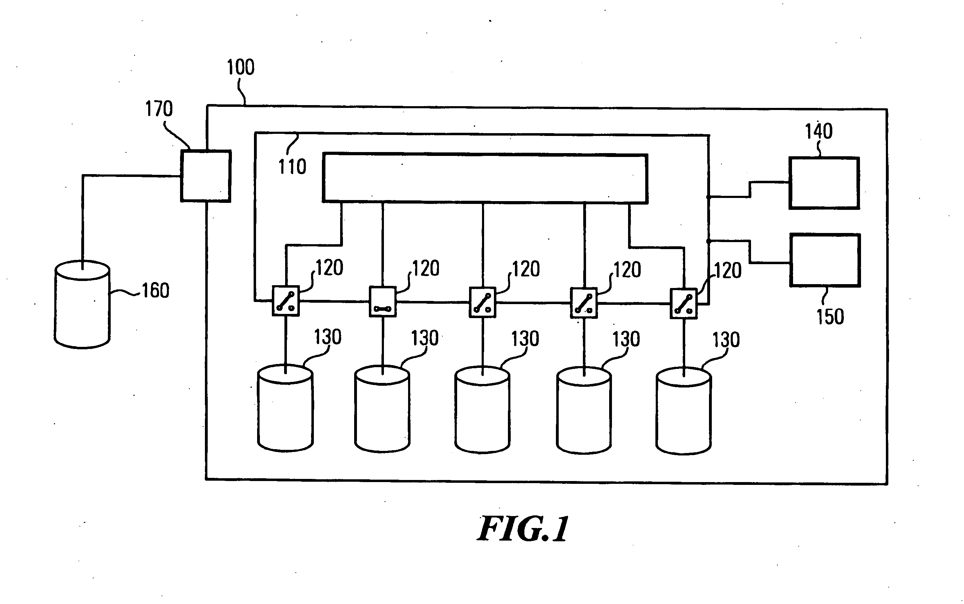

Fig. 1 zeigt eine Datensicherungsvorrichtung (100) bzw. ein System zur Datensicherung in schematischer Weise. Die zu sichernden Daten werden über eine geeignete Schnittstelle (170), so z.B. Ethernet, FireWire, USB oder RS232 in das System zur Datensicherung übertragen. Die Steuereinheit (110) sichert diese Daten auf einem der angeschlossenen Backup-Speichereinheiten (130) bzw. Massenspeicher. Hierzu wird der jeweilige Massenspeicher (130), welcher seinerseits über eine geeignete Schnittstelle, wie z.B. FireWire, USB, Serial ATA oder ADB, angeschlossen ist mit der Steuereinheit (110) verbunden. Die anderen Massenspeicher (130) können von der Steuereinheit (110) getrennt werden, wobei jedoch die Verbindung über die geeignete Schnittstelle zwischen dem Massenspeicher (130) und der Steuereinheit (110) erhalten bleiben kann. Als Massenspeicher (130) zur Aufnahme der zu sichernden Daten kommen Festplatten in Frage sowie CD-RW oder DVD-RW Medien sowie Flash-Speicher nichtflüchtige Festkörperspeicher, Bandlaufwerke (DAT, DLT) sowie ebenfalls WORM Medien (CD-R/DVD+-R/magneto optical discs). Ein Speichermedium weist jeweils eine Lese-/Schreibeinheit auf.

Die z.B. mittels FireWire, mit der Steuerungseinheit verbundenen Sicherungsmedien können ohne Abschalten des Datensicherungssystems (100) entfernt werden oder es können neue hinzugefügt werden. Dies ermöglicht es, einen Massenspeicher (130), der die zu sichernden Daten aufgenommen hat, an einen sichereren Ort (z.B. einen Banktresor) zu verbringen.

Über die Benutzungsschnittstelle (140, 150) kann die Steuerungseinheit programmiert werden. Hierbei können verschiedene Modi der Backupausführung ausgewählt werden. Bei der Programmierung einer täglichen Sicherung kann festgelegt werden, zu welcher Uhrzeit die Steuerungseinheit auf das nächste Sicherungsmedium (Massenspeicher) umschaltet. Dies stellt einen möglichen Modus der Backupausführung dar. Darüber hinaus kann der Benutzer auch eine manuelle Sicherung der Daten veranlassen sowie die manuelle Rücksicherung der Daten einleiten. Zur Datenrücksicherung schaltet die Steuerungseinheit auf das benötigte Sicherungsmedium um. Das manuelle Sichern bzw. Rücksichern stellt zwei weitere Backupausführungsmodi dar.

Die Benutzungsschnittstelle (140; 150) kann aus einem Anzeigefeld (140) und einer Tastatur (150) bestehen. Das Anzeigefeld (140) kann ein digitales, zweizeiliges Anzeigefeld sein und dient zur Informationsanzeige und Konfiguration. Abweichend davon kann die Benutzungsschnittstelle (140; 150) aus einem Anzeigefeld (140) und einem Touch Pad bestehen. Dieses Touch Pad ergänzt oder ersetzt die Tastatur und dient ebenfalls zur Konfiguration des Datensicherungssystems. Ebenso kann die Benutzungsschnittstelle (140; 150) aus einem Bildschirm, Tastatur und Maus bestehen. Hierüber ist es möglich, Informationen über das Datensicherungssystem (100) zu erhalten und das Datensicherungssystem (100) zu konfigurieren, während der Benutzer ein von einem gewöhnlichen PC her gewohntes Bedienungsumfeld vorfindet.

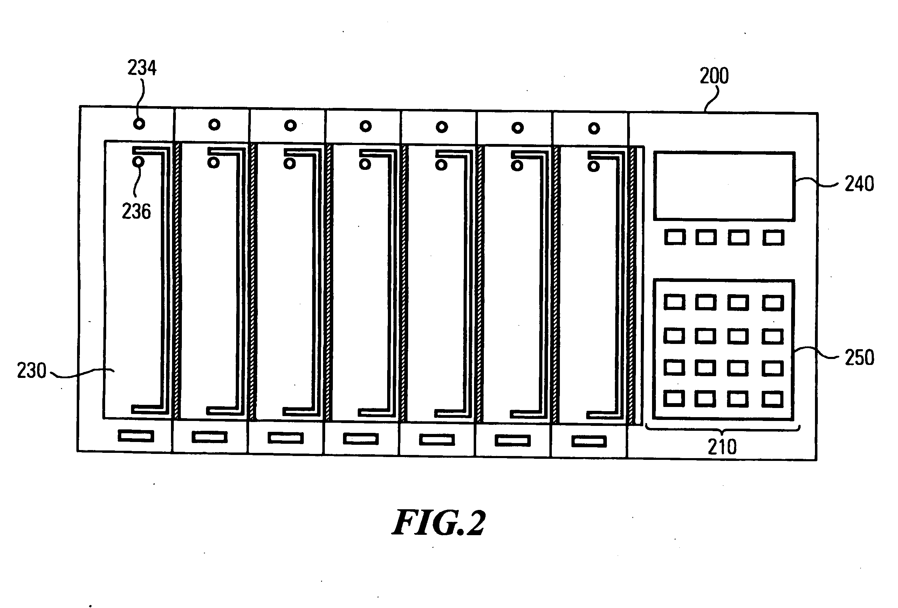

In Fig. 2 ist eine bevorzugte Ausführungsform des Datensicherungssystems (200) gezeigt. Hier befinden sich in mehreren Gehäusen (230) jeweils eine Festplatte (in diesem Fall 7 Gehäuse mit Festplatten, wobei die Anzahl der Gehäuse/Festplatten nur Beispielcharakter hat) und die Steuereinheit (210). Die Steuereinheit (210) beinhaltet ein Anzeigefeld (240) und eine Tastatur (250), und ermöglicht es dem Benutzer, die Datensicherung zu konfigurieren und zu kontrollieren. Die Festplatten befinden sich in leicht entnehmbaren Gehäusen (230), welche sich in einer Führungsvorrichtung befinden. Diese Führungsvorrichtung erlaubt die Entnahme der Festplatten samt Gehäuse aus dem Datensicherungssystem. Zur Anzeige, welche der Festplatten derzeit aktiviert ist, kann eine Lampe (234) an dem Gehäuse des Datensicherungssystems (200) angebracht sein, eine weitere Lampe (236) kann die Aktivität der Festplatte durch ein Aufleuchten anzeigen.

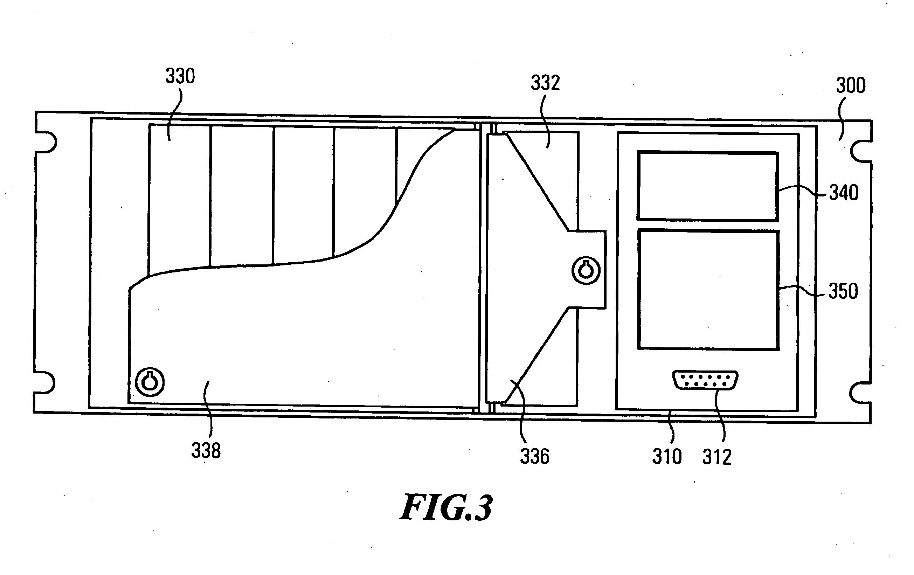

Fig. 3 zeigt eine weitere Ausführungsform des Datensicherungssystems (300). Die Elemente des Datensicherungssystems (300) sind in einem 19-Zoll-Gehäuse untergebracht. Dies hat den Vorteil, dass durch die Standardisierung der 19-Zoll-Gehäuse solch ein Datensicherungssystem leicht in einen schon vorhandenen Überrahmen eingebaut werden kann. In dem Gehäuse befinden sich sechs Sicherungsmedien (330; 332) und die Steuereinheit (310). In dieser Ausführungsform befinden sich insgesamt sechs Sicherungsmedien (330), wobei fünf dieser Sicherungsmedien zur Verhinderung eines unbefugten Entnehmens hinter einer ersten verschließbaren Tür (338) angeordnet sind. Ohne Beschränkung auf eine bestimmte Datensicherungsstrategie können diese fünf verschließbaren Sicherungsmedien (330) die Datensicherungen für die Wochentage Montag bis Freitag enthalten. Das sechste Datensicherungsmedium (332) kann zur separaten Entnahme hinter einer zweiten, gesondert verschließbaren Tür (336) angeordnet sein und kann die Wochensicherung enthalten. Wahlweise kann das sechste Datensicherungsmedium (332) zur leichteren Entnahme auch unverschließbar ohne zweite Tür (336) ausgeführt sein. Nach Abschluss der Wochensicherung auf dieses sechste Medium (332) kann dieses von Hand entnommen werden und durch ein weiteres ersetzt werden. Das entnommene Medium (332) wird dann räumlich getrennt von dem Datensicherungssystem (300), beispielsweise in einem Banktresor, aufbewahrt. Über das Anzeigefeld (340) kann der Status der täglichen Sicherung überprüft werden. Zu Beginn der Benutzung des Datensicherungssystems (300) kann festgelegt werden, zu welcher Uhrzeit das Datensicherungssystem (300) auf das nächste Sicherungsmedium (330; 332) umschalten soll. Anhand des Wissens über Uhrzeit, Datum und Wochentag ist es dem Datensicherungssystem (300) möglich, die Sicherungsmedien zu unterscheiden und auf das aktuell benötigte Sicherungsmedium umzuschalten, wenn diese it der zuvor eingestellten Uhrzeit benötigt wird. Über die Steuereinheit (310) kann auch eine außerplanmäßige, manuelle Sicherung eingeleitet werden. Eine evtl. benötigte Rücksicherung der Daten wird ebenso über die Steuereinheit ausgeführt. Zur manuellen Sicherung sowie zur manuellen Rücksicherung gibt der Benutzer lediglich die Information des benötigten Wochentages an, das Datensicherungssystem (300) schaltet auf das benötigte Medium um und es kann gesichert bzw. wiederhergestellt werden. Nach Beendigung der manuellen Sicherung bzw. Rücksicherung kann das Datensicherungssystem derart konfiguriert sein, so dass es automatisch wieder in den Modus der täglichen Sicherung zurückkehrt. Dafür nimmt das Datensicherungssystem (300) sein eigentliches Programm wieder auf und aktiviert das zu dieser Zeit benötigte Sicherungsmedium. Die Steuereinheit (310) reguliert anhand seines Programmes die Strom- bzw. Datenflüsse zu den einzelnen Datensicherungsmedien und kann somit diese ein- bzw. ausschalten.

Durch die spezielle Konzeption des Datensicherungssystems (300), insbesondere in Verbindung mit dem 19-Zoll-Gehäuse, ist dieses System beliebig erweiterbar. Das Datensicherungssystem kann derart erweitert werden, dass mehrere 19-Zoll-Gehäuse miteinander verbunden werden. Diese Verbindung kann derart erfolgen, dass die Steuereinheiten eines jeden 19-Zoll-Gehäuses über die an der Steuereinheit vorhandene Steckerbuchse (312) mit der Steuereinheit eines anderen Gehäuses verbunden wird. Auch ist die Anzahl der verwendeten Sicherungsmedien nicht auf die zuvor diskutierten fünf oder sieben Sicherungsmedien beschränkt, so dass über die zuvor beschriebene wochenweise Datensicherung auch eine monatsweise, quartalsweise oder jahresweise Datensicherung vorgenommen werden kann.

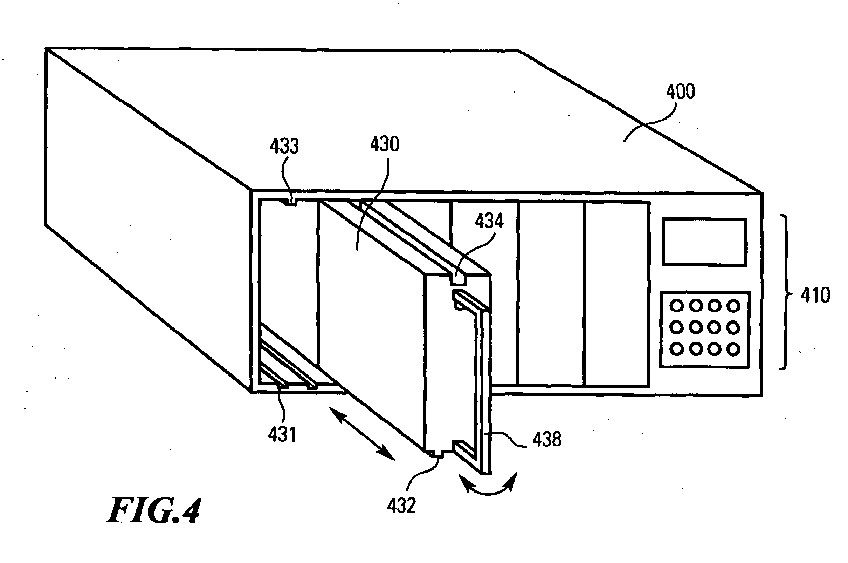

Fig. 4 zeigt eine weitere Ausführungsform des Datensicherungssystems (400). Gezeigt ist die enthaltene Steuereinheit (410) und mehrere entnehmbare Gehäuse (430), wobei eines der entnehmbaren Gehäuse (430) nicht eingezeichnet ist und ein weiteres entnehmbares Gehäuse (430) ist aus dem Einschubsschacht hervorgezogen eingezeichnet. Der Einschubschacht weist Führungsschienen (431; 433) auf, welche zur Führung des einschiebbaren Gehäuses (430) dienen. Das Gehäuse (430) weist entsprechende Führungselemente (432; 434) auf. Um das Gehäuse (430) leichter entnehmen zu können, kann dieses einen Haltebügel (438) aufweisen, welcher schwenk- oder klappbar sein kann.

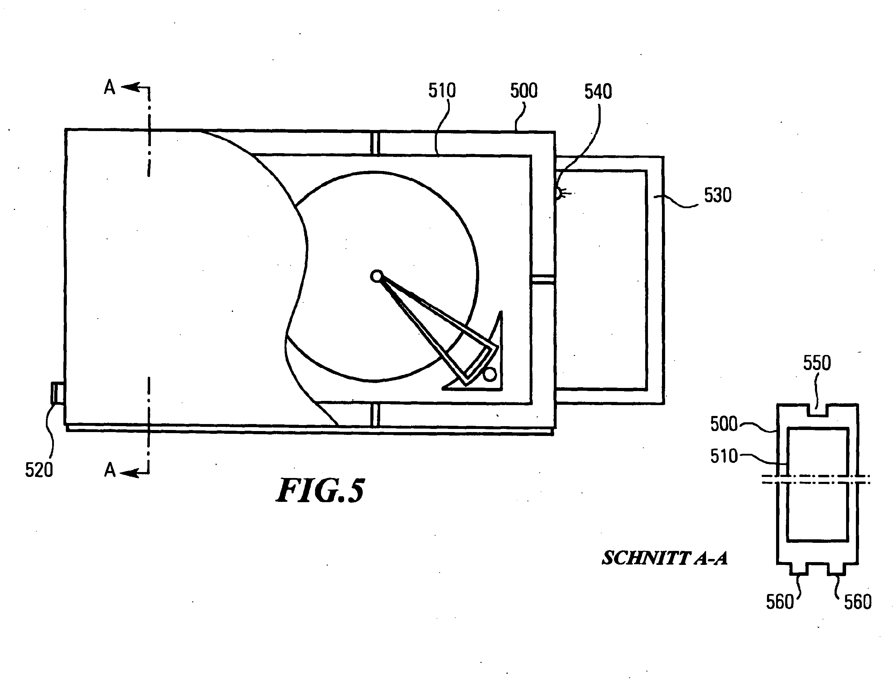

Fig. 5 zeigt ein Gehäuse (500) zur Aufnahme eines Sicherungsmediums (510). In dem Gehäuse befindet sich eine Festplatte (510) und ein Kontroller (nicht gezeichnet). Das die Festplatte (510) umschließende Gehäuse (500) weist auf der einen Kopfseite eine Steckverbindung (520) auf. Diese Steckverbindung (520), beispielsweise eine FireWire-Steckverbindung, stellt beim Einschieben des Gehäuses (500) die Verbindung zum Datensicherungssystem her. Auf der gegenüberliegenden Kopfseite des Gehäuses kann eine Lampe (540) angebracht sein, die dazu dient, die Aktivität der Festplatte und/oder die Aktivierung des Gehäuses (500) mit der darin befindlichen Festplatte (510) als das aktuelle Sicherungsmedium anzuzeigen. Des Weiteren weist das Gehäuse (500) einen Bügel (530) auf zur Erleichterung der Handhabung des Gehäuses (500) beim Herausziehen und Hineinschieben des Gehäuses (500) in das Gehäuse des Datensicherungssystems. Hierzu weist das Gehäuse (500) Führungsvorrichtungen (550;560) auf. Hierzu wurde ein Schnitt durch das Gehäuse (500) gelegt, die Schnittebene ist durch die Linie A angedeutet. In dem Schnittbild ist das Gehäuse (500), die Festplatte (510) sowie die Führungsvorrichtungen (550; 560) abgebildet.

## Patentansprüche

1. Daten-Backup-Speichervorrichtung (100) zur Sicherung von Daten von mindestens einem Datenspeicher (160) mit einem Gehäuse, das eine Steuerungseinheit (110) und N Backup-Speichereinheiten (130) aufweist, mit N ≥ 2, wobei
jede Backup-Speichereinheit (130) mindestens ein Speichermedium mit jeweils einer zugeordneten Lese-/Schreibeinheit aufweist; und
die Steuereinheit (110) Einrichtungen aufweist, die für die Ausführung eines Backups eine oder mehrere, jedoch weniger als N Backup-Speichereinheiten (130) ansteuert und mit den von dem mindestens einem Datenspeicher (160) gelieferten Daten unter Verwendung der jeweils zugeordneten Lese-/ Schreibeinheit der jeweiligen Backup-Speichereinheit (130) beschreibt, **dadurch gekennzeichnet dass** die Steuereinheit (110) Eingabeeinrichtungen (250) und mindestens eine Anzeigevorrichtung (240) aufweist, so dass die Modi der Backup-Ausführung von einem Nutzer an der Steuereinheit (200) programmiert werden können,
wobei die Backups periodisch durchgeführt werden, so dass die Steuerungseinheit (110) eine bestimmte Periode, eine bestimmte Backup-Speichereinheit (130) der N Backup-Speichereinheiten vorsieht und diese bestimmte Backup-Speichereinheit (130) mit Identifikationsdaten beschreibt, so dass die Steuereinheit (110) zur Durchführung eines Backups, das der bestimmten Periode zugeordnet ist, feststellen kann, ob die dieser Periode zugeordnete Backup-Speichereinheit (130) sich in dem Gehäuse befindet.

2. Daten-Backup-Speichervorrichtung (100) nach Anspruch 1, **dadurch gekennzeichnet, dass** für die Ausführung eines Backups genau eine Backup-Speichereinheit (130) angesteuert und beschrieben wird.

3. Daten-Backup-Speichervorrichtung (100) nach einem der Ansprüche 1 und 2, **dadurch gekennzeichnet, dass** jede Backup-Speichereinheit (500) ein Gehäuse aufweist, das so ausgeführt ist, dass die Backup-Spelchereinheit (500) in entsprechende Einschubeinrichtungen des Gehäuses eingeschoben und von diesem entnommen werden kann.

4. Daten-Backup-Speichervorrichtung (100) nach einem der Ansprüche 1 bis 3, **dadurch gekennzeichnet, dass** das Speichermedium und die zugeordnete Lese-/Schreibeinhelt mindestens einer Backup-Speichereinheit als eine Festplatte (510) ausgeführt ist.

5. Daten-Backup-Speichervorrichtung (100) nach einem der Ansprüche 1 bis 4, **dadurch gekennzeichnet, dass** die N Backup-Speichereinheiten (130) der Daten-Backup-Speichervorrichtung (100) von dem Betriebssystem, das den Datenspeicher betreibt, als eine Daten-Speicheneinheit interpretiert werden.

6. Daten-Backup-Speichervorrichtung (100) nach einem der Ansprüche 1 bis 5, **dadurch gekennzeichnet, dass** die Backup-Speichereinheiten (130), die jeweils in einem spezifischen Moment nicht angesteuert und beschrieben werden, ausgeschaltet sind, so dass sie von Strom- und Datenzufuhr getrennt sind.

7. Daten-Backup-Speichervorrichtung (100) nach einem der Ansprüche 1 bis 6, **dadurch gekennzeichnet, dass** zu jedem Zeitpunkt die Backup-Speichereinheiten (130), welche zu diesem Zeitpunkt nicht angesteuert und beschrieben werden, aus dem Gehäuse entnommen werden können, ohne dass Unterbrechungen oder Datenverluste entstehen.

8. Daten-Backup-Speichervorrfchtung (100) nach einem der Ansprüche 1 bis 7, **dadurch gekennzeichnet, dass** jede der Backup-Speichereinheiten (130) ausschließlich Ober die Steuereinheit (110) mit Strom und Daten versorgt wird.

9. Daten-Backup-Speichervorrichtung (100) zur Sicherung von Daten von mindestens einem Datenspeicher (180) mit einem Gehäuse, das eine Steuerungseinheit (100) und N Backup-Speichereinheiten (130) aufweist, mit N ≥ 2,
wobei jede Backup-Speichereinheit (130) mindestens ein Festkörperspeichermedium aufweist; und
die Steuereinheit (110) Einrichtungen aufweist, die für die Ausführung eines Backups eine oder mehrere, jedoch weniger als N Backup-Speichereinheiten (130) ansteuert und mit den von dem mindestens einem Datenspeicher (160) gelieferten Daten unter Verwendung der jeweiligen Backup-Speichereinheit (130) beschreibt, **dadurch gekennzeichnet, dass** die Steuereinheit (110) Eingabeeinrichtungen (250) und mindestens eine Anzeigevorrichtung (240) aufweist, so dass die Modi der Backup-Ausführung von einem Nutzer an der Steuereinheit (200) programmiert werden können,
wobei die Backups periodisch durchgeführt werden, so dass die Steuerungseinheit (110) eine bestimmte Periode, eine bestimmte Backup-Speichereinheit (130) der N Backup-Speichereinheiten vorsieht und diese bestimmte Backup-Speichereinheit (130) mit Identifikationsdaten beschreibt, so dass die Steuereinheit (110) zur Durchführung eines Backups, das der bestimmten Periode zugeordnet ist, feststellen kann, ob die dieser Periode zugeordnete Backup-Speichereinheit (130) sich in dem Gehäuse befindet.

## Claims

1. A data backup storage device (100) for backing up data of at least one data memory (160), comprising a housing including a control unit (110) and N backup storage units (130), with N ≥ 2, wherein
each backup storage unit (130) comprises at least one storage medium having a respective read/write unit associated therewith; and
wherein the control unit (110) includes means which, for executing a backup, access one or a plurality of, but less than N backup storage units (130) and write thereon the data supplied by the at least one data memory (160) making use of the respective associated read/write unit of the backup storage unit (130) in question,
**characterized in that** the control unit (110) comprises input means (250) and at least one display means (240) so that the backup execution modes can be programmed by a user on the control unit (200),
wherein the backups are executed periodically so that the control unit (110) provides a specific period, a specific backup storage unit (130) of the N backup storage units and writes identification data on this specific backup storage unit (130) so that, for executing a backup which is associated with said specific period, the control unit (110) can determine whether the backup storage unit (130) associated with this period is present in the housing.

2. A data backup storage device (100) according to claim 1, **characterized in that**, for executing a backup, precisely one backup storage unit (130) is accessed and written on.

3. A data backup storage device (100) according to one of the claims 1 and 2, **characterized in that** each backup storage unit (500) is provided with a housing which is implemented such that the backup storage unit (500) can be inserted in and removed from said housing in respective directions of insertion.

4. A data backup storage device (100) according to one of the claims 1 to 3, **characterized in that** the storage medium and the associated read/write unit of at least one backup storage unit is implemented as a fixed disk (510).

5. A data backup storage device (100) according to one of the claims 1 to 4, **characterized in that** the N backup storage units (130) of the data backup storage device (100) are interpreted as a data storage unit by the operating system operating the data memory.

6. A data backup storage device (100) according to one of the claims 1 to 5, **characterized in that** the respective backup storage units (130) which are neither accessed nor written on at a specific moment are switched off so that they are separated from the supply of power and data.

7. A data backup storage device (100) according to one of the claims 1 to 6, **characterized in that** the backup storage units (130) which are neither accessed nor written on at a particular moment can at any such moment be removed from the housing without interruptions or data losses being caused.

8. A data backup storage device (100) according to one of the claims 1 to 7, **characterized in that** each of the backup storage units (130) is supplied with power and data exclusively via the control unit (110).

9. A data backup storage device (100) for backing up data of at least one data memory (160), comprising a housing including a control unit (110) and N backup storage units (130), with N ≥ 2,
wherein each backup storage unit (130) comprises at least one solid state storage medium; and
wherein the control unit (110) includes means which, for executing a backup, access one or a plurality of, but less than N backup storage units (130) and write thereon the data supplied by the at least one data memory (160) making use of the respective backup storage unit (130),
**characterized in that** the control unit (110) comprises input means (250) and at least one display means (240) so that the backup execution modes can be programmed by a user on the control unit (200),
wherein the backups are executed periodically so that the control unit (110) provides a specific period, a specific backup storage unit (130) of the N backup storage units and writes identification data on this specific backup storage unit (130) so that, for executing a backup which is associated with said specific period, the control unit (110) can determine whether the backup storage unit (130) associated with this period is present in the housing.

## Revendications

1. Dispositif mémoire de sauvegarde de données (100) pour la protection de données provenant d'au moins une mémoire (160) avec un boîtier, qui comprend une unité de commande (110) et N unités de mémoire de sauvegarde (130), avec N ≥ 2, dans lequel
chaque unité de mémoire de sauvegarde (130) comprend au moins un support de mémoire avec chaque fois une unité de lecture/écriture associée ; et
l'unité de commande (110) comprend des dispositifs, laquelle commande pour l'exécution d'une sauvegarde une ou plusieurs, cependant moins que N, unités de mémoire de sauvegarde (130) et remplit chaque unité de mémoire de sauvegarde (130) avec les données délivrées par les au moins une mémoire (160) par l'utilisation de l'unité de lecture/écriture chaque fois associée,
**caractérisé en ce que** l'unité de commande (110) comprend des dispositifs d'entrée (250) et au moins un dispositif d'affichage (240), de manière que les modes d'exécution de sauvegarde puissent être programmés par l'utilisateur sur l'unité de commande (200),
dans lequel les sauvegardes seront exécutées périodiquement, de manière que l'unité de commande (110) prévoit une période déterminée, une unité de mémoire de sauvegarde prédéterminée (130) parmi les N unités de mémoire de sauvegarde et cette unité de mémoire de sauvegarde prédéterminée (130) est remplie avec des données d'identification, de manière que l'unité de commande (110) puisse vérifier, pour l'exécution d'une sauvegarde à laquelle la période prédéterminée est associée, si l'unité de mémoire de sauvegarde (130) à laquelle cette période est associée se trouve dans le boîtier.

2. Dispositif mémoire de sauvegarde de données (100) selon la revendication 1, **caractérisé en ce que**, pour l'exécution d'une sauvegarde, une unité de mémoire de sauvegarde (130) précise est commandée et remplie.

3. Dispositif mémoire de sauvegarde de données (100) selon l'une quelconque des revendications 1 et 2, **caractérisé en ce que** chaque unité de mémoire de sauvegarde (500) comprend un boîtier, qui est commandé de telle manière que l'unité de mémoire de sauvegarde (500) puisse être insérée dans des dispositifs enfichables et retirés de ceux-ci.

4. Dispositif mémoire de sauvegarde de données (100) selon l'une quelconque des revendications 1 à 3, **caractérisé en ce que** le support de mémoire et l'unité de lecture/écriture associée d'au moins une unité de mémoire de sauvegarde sont réalisés comme un disque dur (510).

5. Dispositif mémoire de sauvegarde de données (100) selon l'une quelconque des revendications 1 à 4, **caractérisé en ce que** les N unités de mémoire de sauvegarde (130) du dispositif de sauvegarde de données (100) sont interprétées par le système d'exploitation, que la mémoire utilise, comme une unité de mémoire de données.

6. Dispositif mémoire de sauvegarde de données (100) selon l'une quelconque des revendications 1 à 5, **caractérisé en ce que** les unités de mémoire de sauvegarde (130), qui chaque fois à un moment spécifique ne sont pas commandées et remplies, sont désactivées, de manière qu'elles soient isolées du flux de courant et de données.

7. Dispositif mémoire de sauvegarde de données (100) selon l'une quelconque des revendications 1 à 6, **caractérisé en ce qu'**à chaque instant, les unités de mémoire de sauvegarde (130), qui ne sont pas commandées ou remplies à cet instant, peuvent être retirées du boîtier sans qu'il se produise des interruptions ou perte de données.

8. Dispositif mémoire de sauvegarde de données (100) selon l'une quelconque des revendications 1 à 7, **caractérisé en ce que** chaque unité de mémoire de sauvegarde (130) est alimentée en courant et données exclusivement par l'unité de commande (110).

9. Dispositif mémoire de sauvegarde de données (100) pour la protection de données provenant d'au moins une mémoire (160) avec un boîtier, qui comprend une unité de commande (110) et N unités de mémoire de sauvegarde (130), avec N ≥ 2, dans lequel
chaque unité de mémoire de sauvegarde (130) comprend au moins un support de mémoire fixe ; et
l'unité de commande (110) comprend des dispositifs, laquelle commande pour l'exécution d'une sauvegarde une ou plusieurs, cependant moins que N, unités de mémoire de sauvegarde (130) et remplit chaque unité de mémoire de sauvegarde (130) avec les données délivrées par les au moins une mémoire (160) par l'utilisation de l'unité de mémoire de sauvegarde correspondante (130),
**caractérisé en ce que** l'unité de commande (110) comprend des dispositifs d'entrée (250) et au moins un dispositif d'affichage (240), de manière que les modes d'exécution de sauvegarde puissent être programmés par l'utilisateur sur l'unité de commande (200),
dans lequel les sauvegardes seront exécutées périodiquement, de manière que l'unité de commande (110) prévoit une période déterminée, une unité de mémoire de sauvegarde prédéterminée (130) parmi les N unités de mémoire de sauvegarde et cette unité de mémoire de sauvegarde prédéterminée (130) est remplie avec des données d'identification, de manière que l'unité de commande (110) puisse vérifier, pour l'exécution d'une sauvegarde à laquelle la période prédéterminée est associée, si l'unité de mémoire de sauvegarde (130) à laquelle cette période est associée se trouve dans le boîtier.
